(19) Europäisches Patentamt / European Patent Office / Office européen des brevets

(11) **EP 4 422 305 A1**

(12) **EUROPEAN PATENT APPLICATION**
published in accordance with Art. 153(4) EPC

(43) Date of publication:
**28.08.2024 Bulletin 2024/35**

(21) Application number: **21960975.7**

(22) Date of filing: **21.10.2021**

(51) International Patent Classification (IPC):
*H04W 72/00* $^{(2023.01)}$

(52) Cooperative Patent Classification (CPC):
**H04W 72/00**

(86) International application number:
**PCT/CN2021/125348**

(87) International publication number:
**WO 2023/065225 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **JI, Pengyu**
**Beijing 100022 (CN)**

• **JIANG, Qinyan**
**Beijing 100022 (CN)**
• **ZHANG, Jian**
**Beijing 100022 (CN)**
• **LI, Guorong**
**Beijing 100022 (CN)**
• **WANG, Xin**
**Beijing 100022 (CN)**

(74) Representative: **Haseltine Lake Kempner LLP**
**Cheapside House**
**138 Cheapside**
**London EC2V 6BJ (GB)**

(54) **SIGNAL SENDING METHOD AND APPARATUS, AND COMMUNICATIONS SYSTEM**

(57) Embodiments of this disclosure provide an apparatus for transmitting a signal, applicable to a first terminal equipment, the first terminal equipment performing sidelink communications, the apparatus including a first transmitting unit, the first transmitting unit being configured to: determine information on cyclic prefix extension (CPE) according to information on data to be transmitted; and perform sidelink signal transmission according to the CPE.

**FIG. 10**

**Description**

Technical Field

This disclosure relates to the field of communication technologies.

Background

In unlicensed band new radio (NR-U) techniques, a portion of continuous occupancy time (COT) obtained from access initiated by a network device (such as a gNB) may be shared by a terminal equipment (i.e. COT sharing) for uplink (UL) transmission. For example, by configuring cyclic prefix extension (CPE), the network device gNB may control a mode of listen before talk (i.e. LBT type) of the terminal equipment (such as a UE) and a time when the terminal equipment UE performs access.

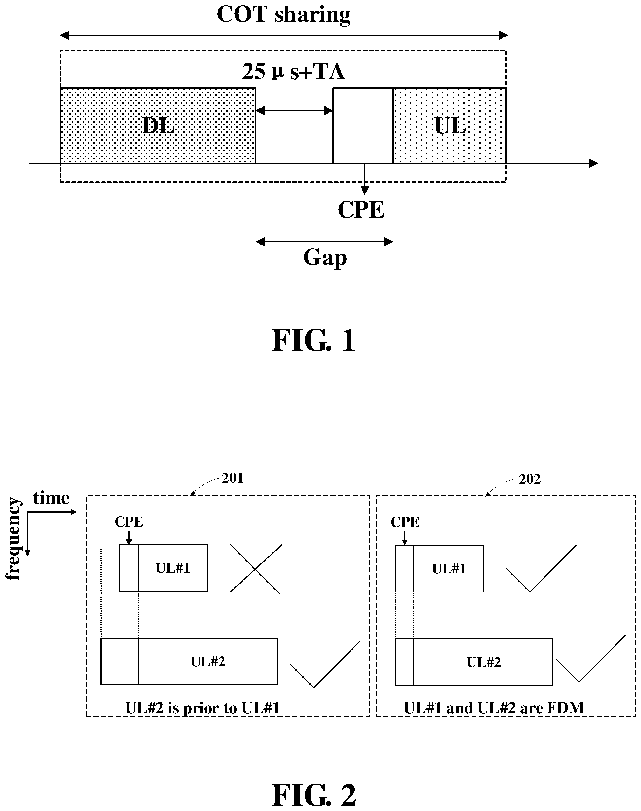

The CPE is CP extension of a first uplink data signal after downlink transmission within a continuous occupancy time (COT) obtained by the network device (such as a gNB), which may not carry valid information. FIG. 1 is a schematic diagram of CPE configuration in NR-U. As shown in FIG. 1, the network device may set an interval between downlink (DL) transmission and uplink (UL) transmission to be 25 $\mu$s+TA by configuring the CPE; where, TA denotes timing advance. In FIG. 1, a length of the CPE is gap-(25 $\mu$s+TA); where, gap denotes a gap between the DL transmission and practical UL transmission.

For configured grant (CG), the network device may also configure a starting time of the UL transmission, i.e. the length of the CPE, via higher-layer signaling. The higher-layer may, via parameters, configure lengths of $\Delta$ parameters of the CG of the terminal equipment in four cases: {occupying all LBT bandwidths and within a COT}, {occupying all LBT bandwidths and outside a COT}, {occupying part of an LBT bandwidth and within a COT} and {occupying part of an LBT bandwidth and within a COT}, and {occupying part of LBT bandwidth within COT}, and the terminal equipment may obtain a CPE length $T_{\text{ext}}$ to which its CG UL transmission corresponds through calculation by using formula (1) below:

$$T_{\text{ext}} = \sum_{k=1}^{2^{\mu}} T^{\mu}_{\text{symb},(l-k)\bmod 7 \cdot 2^{\mu}} - \Delta_i \qquad (1),$$

where, a relationship between an index i and a parameter $\Delta_i$ is shown in Table 1 below.

Table 1

| index $i$ | $\Delta_i$ |
|---|---|
| 0 | $16 \cdot 10^{-6}$ |
| 1 | $25 \cdot 10^{-6}$ |
| 2 | $34 \cdot 10^{-6}$ |
| 3 | $43 \cdot 10^{-6}$ |
| 4 | $52 \cdot 10^{-6}$ |
| 5 | $61 \cdot 10^{-6}$ |
| 6 | $\sum_{k=1}^{2^{\mu}} T^{\mu}_{\text{symb},(l-k)\bmod 7 \cdot 2^{\mu}}$ |

In the Table 1, $\sum_{k=1}^{2^{\mu}} T^{\mu}_{\text{symb},(l-k)\bmod 7 \cdot 2^{\mu}}$ is a total length of a predetermined number of symbols before a symbol with an index $l$ if practical UL transmission starts at the symbol; where, $\mu$ is a subcarrier spacing (SCS) index.

As can be seen from the above formula and explanations, the smaller a value of parameter 4 , the larger a value of the CPE, indicating that the terminal equipment is able to start the UL transmission earlier, so as to achieve faster channel preemption. In a practical system, a network device may configure different CPE values for UL transmissions of different terminal equipments to achieve an effect of prioritizing channel access for certain transmissions, and at this moment, for transmissions considered by the network device as having higher priorities, larger CPE values are configured; and at the same time, identical CPE values may be configured for two transmissions that have been allocated with FDM resources, so that their times in accessing to channels are identical, and LBT results thereof are not affected, which may achieve an effect of using frequency division multiplexing (FDM) UL resources for transmission at the same time.

FIG. 2 is a schematic diagram of CG priority access and FCM access transmission. As shown in FIG. 2, in a scenario shown in 201, a value of CPE of UL#2 is greater than that of UL#1, hence, UL#2 is able to be prioritized in access to transmission over UL#1. And in a scenario shown in 202, a value of CPE of UL#2 is identical to that of UL#1, therefore, UL#2 and UL#1 are able to use UL resources of FDM for transmission at the same time.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary of the Disclosure

In order to enhance data throughput on a sidelink and increase system capacity, a feasible method is to increase available bands of the sidelink, such as deploying a sidelink on unlicensed bands, i.e. an unlicensed band sidelink (SL-U) technique.

In the SL-U technique, if a resource selection and collision avoidance mechanism of a terminal equipment (such as a UE) is only based on LBT, that is, no sensing/selection process on a sidelink is performed, it causes the UE not to learn a value of used CPE and frequency-domain resources used between UEs, and it becomes very difficult for the UEs to perform SL transmission in an FDM manner. Hence, a better approach is a solution of LBT+sensing/selection. LBT and sensing/selection may coexist, at least.

It was found by the inventors of this disclosure that CG similar to NR-U is initiated by a UE to occupy COT. In SL-U, especially a UE operating in mode 2, with no network device involved, the UE is also needed to initiate occupation of COT; thus, without participation of a base station, how to control an order of channel access between different UEs or how to enable SL transmissions of different UEs to perform FDM to improve system spectrum efficiency is a problem that needs to be solved.

In order to solve at least one of the above problems, embodiments of this disclosure provide a method and apparatus for transmitting a signal and a communication system, in which a terminal equipment performing sidelink (SL) communication determines information on cyclic prefix extension (CPE) according to information on data to be transmitted. Hence, in a scenario of sidelink communication, an order of channel access of the terminal equipment may be controlled.

According to one aspect of the embodiments of this disclosure, there is provided an apparatus for transmitting a signal, applicable to a first terminal equipment, the first terminal equipment performing sidelink communications, the apparatus including a first transmitting unit, the first transmitting unit being configured to:

determine information on cyclic prefix extension (CPE) according to information on data to be transmitted; and perform sidelink signal transmission based on the CPE.

According to another aspect of the embodiments of this disclosure, there is provided an apparatus for transmitting a signal, applicable to a first terminal equipment, the first terminal equipment performing sidelink communications, the apparatus including a second transmitting unit, the second transmitting unit being configured to:

set a value of cyclic prefix extension (CPE) to which currently transmitted data of the first terminal equipment correspond according to values or priorities of resources used by the currently transmitted data in other CPE to which other transmitted data of identical time units correspond and a value of first CPE; and perform sidelink signal transmission based on the CPE, wherein the other transmitted data are data transmitted by a second terminal equipment.

An advantage of the embodiments of this disclosure exists in that the terminal equipment performing sidelink (SL) communication determines information on cyclic prefix extension (CPE) according to information on data to be transmitted. Hence, in a scenario of sidelink communication, an order of channel access of the terminal equipment may be controlled.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

FIG. 1 is schematic diagram of CPE configuration in an NR-U;
FIG. 2 is a schematic diagram of priority access of a CG and FCM access transmission;
FIG. 3 is a schematic diagram of a method for transmitting a signal of an embodiment of a first aspect of this disclosure;
FIG. 4 is a schematic diagram of CPE in the embodiment of the first aspect;
FIG. 5 is a schematic diagram of indicating a value of the CPE by a first terminal equipment;
FIG. 6 is a schematic diagram of a method for transmitting a signal of an embodiment of a second aspect of this disclosure;
FIG. 7 is a schematic diagram of operating the first terminal equipment to set the CPE value to which the currently transmitted data correspond in operation 601;
FIG. 8 is a schematic diagram of a case where a first terminal equipment, a second terminal equipment and a third terminal equipment share a COT;
FIG. 9 is a schematic diagram of selecting a CPE value by the first terminal equipment from a set of CPE values for transmission of each period in a case of periodic transmission;
FIG. 10 is a schematic diagram of an apparatus for transmitting a signal in an embodiment of a fourth aspect;
FIG. 11 is a schematic diagram of an apparatus for transmitting a signal in an embodiment of a fifth aspect; and
FIG. 12 is a schematic diagram of a terminal equipment in an embodiment of a sixth aspect.

Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G and 5G and new radio (NR) in the future, etc., and/or other communication protocols that are currently known or will be developed in the future.

In the embodiments of this disclosure, the term "network device", for example, refers to a device in a communication system that accesses a terminal equipment to the communication network and provides services for the terminal equipment. The network device may include but not limited to the following equipment: an integrated access and backhaul node (IAB-node), a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or a core network device, and may include one or more network devices described above. The term "user side" or "terminal side" or "terminal equipment side" refers to a side of a user or a terminal, which may be a UE, and may include one or more terminal equipments described above. "Device" may refer to a network device, or may refer to a terminal equipment.

Without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, transmitting or receiving a PUSCH may be understood as transmitting or receiving uplink data carried by the PUSCH, transmitting or receiving a PUCCH may be understood as transmitting or receiving uplink information carried by the PUSCH, transmitting or receiving a PRACH may be understood as transmitting or receiving a preamble carried by the PRACH, and an uplink signal may include an uplink data signal and/or an uplink control signal, etc., and may also be referred to as uplink (UL) transmission or uplink information or an uplink channel. Transmitting uplink transmission on an uplink resource may be understood as transmitting the uplink transmission by using the uplink resource. Likewise, downlink data/signal/channel/information may be understood accordingly.

In the embodiments of this disclosure, higher-layer signaling may be, for example, radio resource control (RRC) signaling; for example, it is referred to an RRC message, which includes a master information block (MIB), system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

Embodiment of a first aspect

The embodiment of the first aspect of this disclosure provides a method for transmitting a signal, applicable to a first terminal equipment, the first terminal equipment performing sidelink communications, for example, the method for transmitting a signal is applicable to a scenario of SL-U.

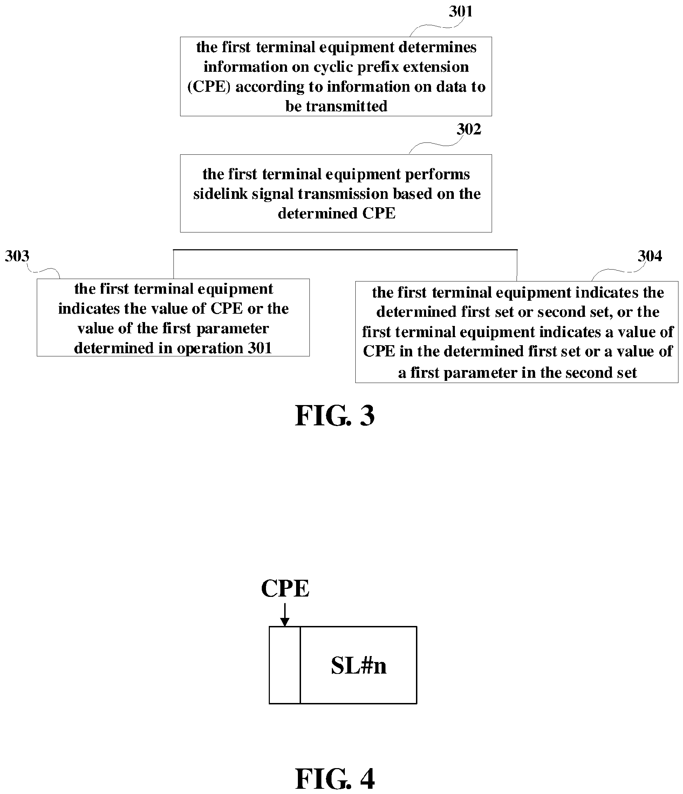

FIG. 3 is a schematic diagram of a method for transmitting a signal of the embodiment of the first aspect of this disclosure. As shown in FIG. 3, the method includes:

operation 301: the first terminal equipment determines information on cyclic prefix extension (CPE) according to information on data to be transmitted; and
operation 302: the first terminal equipment performs sidelink signal transmission based on the determined CPE.

According to the embodiment of the first aspect of this disclosure, the first terminal equipment performing sidelink (SL) communication determines the information on cyclic prefix extension (CPE) according to the information on data to be transmitted. Hence, in a scenario of sidelink communication, an order of channel access of the terminal equipment may be controlled.

The information on CPE includes: a value of the CPE or a value of a first parameter, the value of the first parameter being used for calculating the value of the CPE. For example, the value of the first parameter may be a $\Delta$ parameter.

FIG. 4 is a schematic diagram of the CPE in the embodiment of the first aspect. As shown in FIG. 4, in a scenario of SL communications, the CPE is CP extension of a sidelink data signal SL#n.

In the embodiment of the first aspect, the information on the data to be transmitted includes: a priority of the data to be transmitted, and/or a package delay budget (PDB) of the data to be transmitted, wherein the priority may be denoted by a priority value. For example, the lower a value of the priority of the data to be transmitted, the larger the value of the CPE. For another example, the smaller the PDB of the data to be transmitted, the larger the value of the CPE.

The embodiment of the first aspect shall be described below in detail.

Implementation A

In Implementation A of the method for transmitting a signal in the embodiment of the first aspect of this disclosure, there exists a mapping relationship between the information on the data to be transmitted and the value of the CPE or the value of the first parameter.

Embodiment 1

In an example, the priority value and/or PDB of the data to be transmitted may have a direct mapping relationship with the value of the CPE, which may be configured by a radio resource control information element (RRC IE) in a sidelink resource pool, or may be preconfigured or predefined, or may be configured by a secondary information block (SIB) of the network device or an RRC message (which is, for example, applicable to a terminal equipment within the coverage, i.e. in-coverage UE). The mapping between the priority value and/or PDB and the CPE may be one-to-one or many to one. Table 2 is a schematic diagram of the mapping relationship between the priority value and the CPE value.

Table 2

| Priority value #0 | CPE value #0 |
|---|---|
| Priority value #1 | CPE value #1 |
| ... | ... |
| Priority value #M | CPE value #N |

The lower the priority value, the higher the priority. Therefore, the smaller the priority value, the larger the CPE value to which the data to be transmitted corresponds, which may prioritize channel access.

In another example, there exists a mapping relationship between the priority value and/or PDB of the data to be transmitted and a value of a first parameter (e.g., a $\Delta$ parameter), which may be configured or defined, or may be preconfigured or predefined. Table 3 is a schematic diagram of the mapping relationship between the priority value and the value of the $\Delta$ parameter ($\Delta$ value).

Table 3

| Priority value #0 | $\Delta$value #0 |
|---|---|
| Priority value #1 | $\Delta$value #1 |
| ... | ... |
| Priority value #M | $\Delta$value #N |

With the mapping relationship shown in Table 3, the first terminal equipment may obtain the value of the corresponding $\Delta$ parameter according to the priority value of the data to be transmitted, and then obtain the CPE value, i.e. $T_{\text{ext}}$, by using formula (1a):

$$T_{\text{ext}} = \sum_{k=1}^{2^{\mu}} T^{\mu}_{\text{symb},(l-k)\bmod 7\cdot 2^{\mu}} - \Delta \qquad (1a).$$

The smaller values of the data to be transmitted with lower priority values, the smaller the value of the corresponding $\Delta$ parameter, and the larger the corresponding CPE value.

In Embodiment 1, in a case where the first terminal equipment initiates continuous occupancy time (COT) (i.e. a case of OutsideCOT), the first terminal equipment determines the value of the CPE according to the above mapping relationship (e.g. the mapping relationship shown in Table 2 or Table 3). In a case where the first terminal equipment shares continuous occupancy time (COT) initiated by another terminal equipment different from the first terminal equipment (i.e. a case of InsideCOT), the first terminal equipment determines the value of the CPE according to indication information transmitted by the other terminal equipment. For example, the indication information may be carried by sidelink control information (SCI).

For example, for each priority value or PDB, the corresponding CPE value or the value of the $\Delta$ parameter only corresponds to the case of OutsideCOT, that is, the above mapping relationship represents a mapping relationship between the priority value or PDB and the CPE value or the value of the $\Delta$ parameter in the case of OutsideCOT; and in the case of InsideCOT (that is, the other terminal equipments initiates continuous occupancy time (COT), and the first terminal equipment shares the COT), the value of the CPE to which the data to be transmitted of the first terminal equipment correspond is not determined by the priority value or PDB of the data to be transmitted, but rather, for example, the other terminal equipment initiating COT sharing indicates (such as via SCI) that both the first terminal equipment and the other terminal equipment perform COT sharing, and indicates (such as via SCI) a magnitude of the CPE value (or the $\Delta$ value) and relevant information.

The mapping relationship between the priority value and the CPE value or the value of the $\Delta$ parameter in the case of OutsideCOT may be represented in forms shown in Tables 4 and 5 below, for example.

Table 4

| Priority value #0 | CPE_OutsideCOT value #0 |
| Priority value #1 | CPE_OutsideCOT value #1 |
| ... | ... |
| Priority value #M | CPE_OutsideCOT value #N |

Table 5

| Priority value #0 | $\Delta$_OutsideCOT value #0 |
| Priority value #1 | $\Delta$_OutsideCOT value #1 |
| ... | ... |
| Priority value #M | $\Delta$_OutsideCOT value #N |

Embodiment 2

In Embodiment 2, the mapping relationship between the information on the data to be transmitted and the value of the CPE or the value of the first parameter includes:
a mapping relationship between the information on the data to be transmitted and a value of the CPE in a case where the first terminal equipment initiates a COT (i.e. the case of OUTsideCOT) and a value of the CPE in the case where the first terminal equipment shares the COT initiated by another terminal equipment different from the first terminal equipment (i.e. the case of InsideCOT), or a mapping relationship between the information on the data to be transmitted and a value of the first parameter in a case where the first terminal equipment initiates a COT and a value of the first parameter in the case where the first terminal equipment shares the COT initiated by another terminal equipment different from the first terminal equipment.

For example, for each priority value or PDB, it may correspond to two different CPE values or $\Delta$ parameter values, and the two values correspond to the case of InsideCOT and the case of OutsideCOT, respectively. The CPE values in the case of InsideCOT and the case of OutsideCOT to which each priority value or PDB corresponds may be identical or different.

Table 6 is a schematic diagram of a mapping relationship between the priority value and the CPE value in the case InsideCOT and the CPE value in the case of OutsideCOT.

Table 6

| Priority value #0 | CPE_OutsideCOT value #0 | CPE_InsideCOT value #0 |
| Priority value #1 | CPE_OutsideCOT value #1 | CPE_InsideCOT value #1 |

(continued)

| ... | ... | ... |
|---|---|---|
| Priority value #M | CPE_OutsideCOT value #N | CPE_InsideCOT value #N |

Table 7 is a schematic diagram of a mapping relationship between the priority value and the $\Delta$ parameter value in the case InsideCOT and the $\Delta$ parameter value in the case of OutsideCOT.

Table 7

| Priority value #0 | $\Delta$_OutsideCOT value #0 | $\Delta$_InsideCOT value #0 |
|---|---|---|
| Priority value #1 | $\Delta$_OutsideCOT value #1 | $\Delta$_InsideCOT value #1 |
| ... | ... | ... |
| Priority value #M | $\Delta$_OutsideCOT value #N | $\Delta$_InsideCOT value #N |

In the above explanations of embodiments 1 and 2 of Implementation A, tables 2-7 only list the case where the information on the data to be transmitted is a priority, and a case where the information on the data to be transmitted is a PDB is similar thereto. For example, the PDB value of the data to be transmitted may be used to replace the priority value in embodiments 1 and 2. It may be configured that the smaller PDB value of the data to be transmitted, the larger the corresponding CPE value. In addition, the corresponding CPE value may also be determined jointly by {Priority value, PDB value}, that is, the above priority value is replaced by a {Priority value, PDB value} pair.

In at least one embodiment, as shown in FIG. 3, the method for transmitting a signal further includes: operation 303: the first terminal equipment indicates the value of CPE or the value of the first parameter determined in operation 301.

For example, in the sidelink control information (SCI) transmitted by the first terminal equipment, the CPE value or $\Delta$ value determined in operation 301 to which subsequent transmission corresponds may be indicated. Specifically, the CPE value or $\Delta$ value may be indicated in an existing reserve bit in an existing SCI format or a new field, wherein the corresponding SCI format may be the existing SCI format 1-A, or SCI format 2-A or SCI format 2-B in the standards; in addition, it may also be indicated by a field in an SCI format newly added in 3GPP Release 18 (R-18). And furthermore, this information may also not be indicated in the SCI, and the first terminal equipment may indirectly and implicitly obtain the priority value transmitted by its SL in the above method via a value indicated by an existing priority field in the SCI, and thus obtain the value of the CPE or the value of the first parameter.

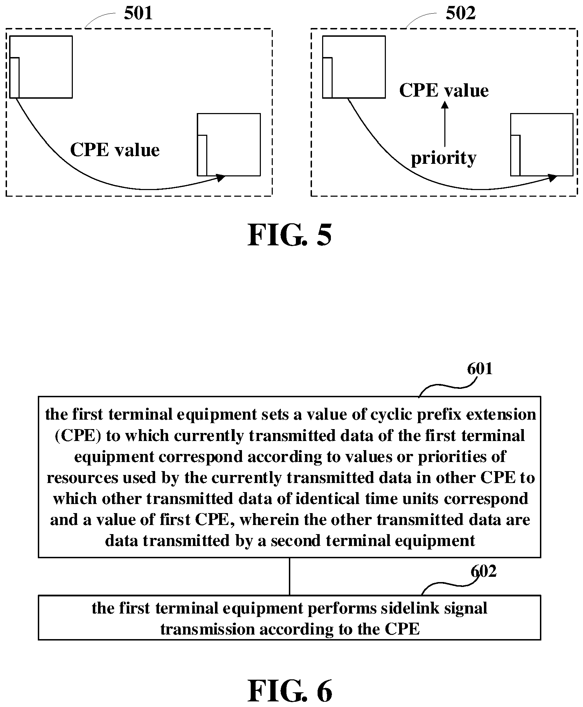

FIG. 5 is a schematic diagram of indicating the CPE value by the first terminal equipment. As shown in 501 of FIG. 5, the first terminal equipment directly indicates the CPE value to the subsequent transmission. As shown in 502 of FIG. 5, the first terminal equipment indicates a value related to a priority to the subsequent transmission, and the subsequent transmission determines the CPE value according to the value related to the priority.

Implementation B:

In Implementation B, there exists a mapping relationship between the information on the data to be transmitted and a first set of CPE values or a second set of values of the first parameter. In operation 301, the first terminal equipment may determine the first set or the second set according to the information on the data to be transmitted and the above mapping relationship, then select a CPE value from the first set, or select a value of the first parameter from the second set, and calculate the CPE value according to the value of the first parameter.

For example, the first terminal equipment selects (such in a random manner of selection, or other manners of selection) a CPE value from the first set and take it as the determined CPE value; or, the first terminal equipment calculates the CPE value by using the value of the first parameter selected (such in a random manner of selection, or other manners of selection) from the second set and take it as the determined CPE value.

In one embodiment, the mapping relationship only includes: a mapping relationship between the information on the data to be transmitted and the first set of CPE values or the second set of values of the first parameter in the case of OUTside COT. For example, in the case where the first terminal equipment initiates continuous occupancy time (COT) (i.e. in the case of OUTside COT), the first terminal equipment determines the first set according to the mapping relationship (that is, there exists a mapping relationship between the information on the data to be transmitted and the first set of CPE values or the second set of the values of the first parameter); and for another example, in the case where the first terminal equipment shares continuous occupancy time (COT) initiated by the other terminal equipment different from the first terminal equipment (i.e. in the case of Inside COT), the first terminal equipment determines the first set according to the indication information transmitted by the other terminal equipment. For example, the indication information may be transmitted via the SCI.

In another embodiment, there exists a mapping relationship between the information on the data to be transmitted and the first set of CPE values or the second set of values of the first parameter in the case of Outside COT or the case of Inside COT. For example, the mapping relationship includes: a mapping relationship between the information on the data to be transmitted and a first set in a case where the first terminal equipment initiates a COT (i.e. the case of OUTside COT) and a first set in the case where the first terminal equipment shares the COT initiated by another terminal equipment different from the first terminal equipment (i.e. the case of INside COT); or, a mapping relationship between the information on the data to be transmitted and a second set in the case where the first terminal equipment initiates a COT (i.e. the case of OUTside COT) and a second set in the case where the first terminal equipment shares the COT initiated by another terminal equipment different from the first terminal equipment (i.e. the case of INside COT). Therefore, no matter whether in the case of Outside COT or the case of Inside COT, the first set or the second set may be obtained according to a corresponding mapping relationship.

In Implementation B, as shown in FIG. 3, the method for transmitting a signal further includes:

operation 304: the first terminal equipment indicates the determined first set or second set, or the first terminal equipment indicates a value of CPE in the determined first set or a value of a first parameter in the second set.

In operation 304, the value of CPE in the determined first set indicated (such as via SCI) by the first terminal equipment includes: a maximum value or a minimum value in the first set, or a value selected based on implementation. And the value of the first parameter in the determined second set indicated (such as via SCI) by the first terminal equipment includes a maximum value or a minimum value in the second set, or a value selected based on implementation.

According to the embodiment of the first aspect of this disclosure, the terminal equipment performing sidelink (SL) communication determines information on cyclic prefix extension (CPE) according to information on the data to be transmitted. Hence, in a scenario of sidelink communication, an order of channel access of the terminal equipment may be controlled.

Embodiment of a second aspect

The embodiment of the second aspect of this disclosure provides a method for transmitting a signal, applicable to a first terminal equipment, the first terminal equipment performing sidelink communications, for example, the method for transmitting a signal is applicable to a scenario of SL-U.

FIG. 6 is a schematic diagram of a method for transmitting a signal of the embodiment of the second aspect of this disclosure. As shown in FIG. 6, the method includes:

operation 601: the first terminal equipment sets a value of cyclic prefix extension (CPE) to which currently transmitted data of the first terminal equipment correspond according to values or priorities of resources used by the currently transmitted data in other CPE to which other transmitted data of identical time units correspond and a value of first CPE, wherein the other transmitted data are data transmitted by a second terminal equipment; and

operation 602: the first terminal equipment performs sidelink signal transmission according to the CPE.

According to the embodiment of the second aspect of this disclosure, considering the information on other transmitted data of FDM, the CPE value of the currently transmitted data is set, which may facilitate different terminal equipments to perform SL transmission in an FDM manner, thereby improving spectrum efficiency.

In the second embodiment, resources used by the other transmitted data and the currently transmitted data are at identical time units, hence, the other transmitted data and the currently transmitted data are transmitted in a frequency division multiplexing (FDM) manner.

In the second embodiment, the first CPE value refers to a CPE value determined by the first terminal equipment, or a CPE value selected by the first terminal equipment from a set of determined CPE values. For example, the first terminal may determine the CPE value or determine the set of CPE values in the method described in the embodiment of the first aspect.

The CPE value selected from the set of determined CPE values includes: a value selected (such as in a random selection manner) from the set of CPE values based on implementation, or a maximum value or a minimum value in the set of CPE values.

In an SL-U scenario, the first terminal equipment may perform the sensing+resource selection process defined in NR V2X of 3GPP Release 16 (R16). In or before transmitting by using the resource selected in the process, resource reservation conditions of another terminal equipment may be obtained from the previous sensing result, so as to determine whether the resource is frequency division multiplexed (FDM) with reserved resources of the other terminal equipment (such as a UE). If not, the CPE value of the data to be transmitted to which a current resource corresponds may be determined in the method in the embodiment of the first aspect (in addition, other methods may also be used), and LBT may be performed before the transmission. If connection is successful, the resource and the CPE value to which it corresponds are used to perform sidelink (SL) transmission; otherwise (i.e. if yes), the CPE value of the current data to be transmitted may be set in the method for transmitting a signal provided in the embodiment of the second aspect, and then SL transmission may be performed.

For example, operations of the first terminal may be:

determining the CPE value (i.e. the value of the first CPE) used by the currently transmitted data (i.e. the data to be transmitted) by the first terminal equipment, wherein the first terminal may determine the CPE value in the method of operation 301 in the embodiment of the first aspect or other methods;

determining a CPE value to which other transmitted data in the same time unit (such as the same slot, and the same symbol, etc.) as resources used by the currently transmitted data correspond, wherein resource information used by the other transmitted data may be obtained by the first terminal equipment in a sensing process by decoding corresponding resource reservation SCI before the other transmitted data, the reservation being reservation for resources used for retransmission, or reservation for resources used for subsequent periods after periodic transmission; and

setting the CPE value to which the currently transmitted data correspond by the first terminal equipment by using the above operation 601.

In first implementation of operation 601, if a CPE value to which at least one of the other transmitted data corresponds is greater than the value of the first CPE, the first terminal equipment sets the CPE value to which the currently transmitted data correspond to be a maximum value in CPE values to which at least one of the other transmitted data corresponds. In a case where all CPE values to which the other transmitted data correspond are not greater than the value of the first CPE, the first terminal equipment takes the value of the first CPE as the CPE value to which the currently transmitted data correspond.

For example, if one or more CPE values to which other transmitted data correspond is/are greater than the value of the first CPE, the first terminal equipment adjusts/sets/changes the CPE value of the currently transmitted data to a maximum value of corresponding CPE of other transmitted data that are frequency division multiplexed with the currently transmitted data; and if there exists no other transmission that is frequency division multiplexed with the current transmission and having a CPE value greater than the current transmission, the first terminal equipment takes the value of the first CPE as the CPE value used in currently transmitted data.

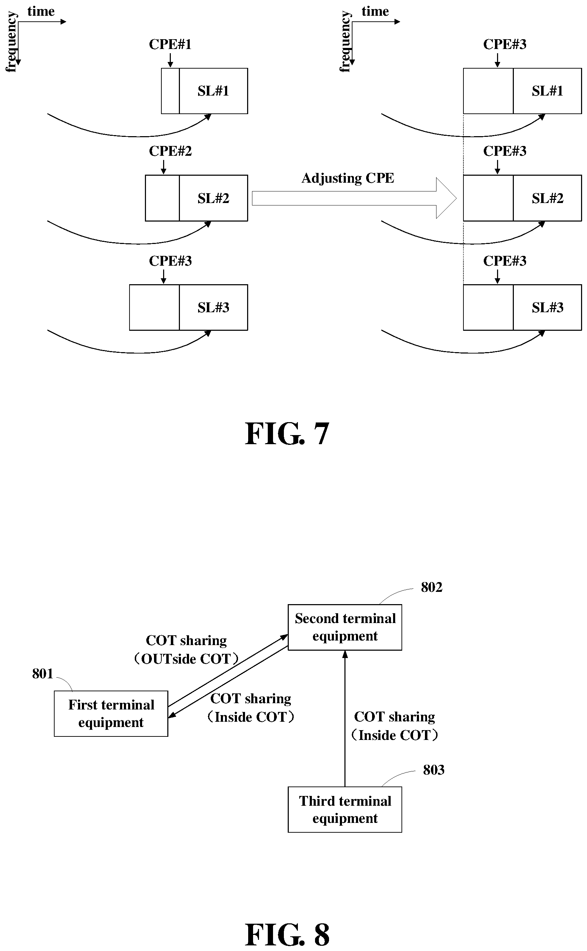

FIG. 7 is a schematic diagram of operating the first terminal equipment to set the CPE value to which the currently transmitted data correspond in operation 601. As shown in FIG. 7, a currently transmitted data of the first terminal equipment is SL#2, and a value a corresponding first CPE is CPE#2; and other transmitted data are SL#1 and SL#3, and values of corresponding CPE are CPE#1 and CPE#3, wherein terminal equipments that transmit SL#1 and SL#3 are a second terminal equipment#1 and a second terminal equipment#3, respectively. Resources used by SL#1, SL#2 and SL#3 are in identical time units, and CPE#1<CPE#2<CPE#3. Therefore, the first terminal equipment adjusts the value of the CPE to which the currently transmitted data corresponds from the value CPE#2 of the first CPE to the maximum value in the CPE values to which the other transmitted data correspond, i.e. CPE#3. In addition, the terminal equipment that transmits the other transmitted data SL#1 (such as the second terminal equipment#1) may also perform operation 601 to adjust the CPE value to which the other transmitted data SL#1 corresponds from CPE#1 to CPE#3.

In second implementation of operation 601, the first terminal equipment may set the value of the CPE to the currently transmitted data correspond to be a maximum value in CPE values to which transmitted data in other transmitted data having a first identifier correspond, wherein the first identifier is used to indicate that the second terminal equipment performs data transmission in a case where the second terminal equipment shares continuous occupancy time (COT) initiated by the third terminal equipment, that is, the first identifier is used to indicate that the second terminal equipment is in the case of INside COT.

FIG. 8 is a schematic diagram of a case where a first terminal equipment, a second terminal equipment and a third terminal equipment share a COT.

As shown in FIG. 8, the second terminal equipment 802 performs data transmission in a case where the second terminal equipment shares continuous occupancy time (COT) initiated by the third terminal equipment 803, that is, the second terminal equipment is in the case of INside COT.

As shown in FIG. 8, the first terminal equipment 801 may transmit the current data in a case where the first terminal equipment shares continuous occupancy time (COT) initiated by the second terminal equipment 802, that is, the first terminal equipment may transmit the current data in the case of INside COT. And the first terminal equipment 801 may also transmit the current data in a case where it initiates COT, that is, the first terminal equipment may transmit the current data in the case of OUTside COT.

In the second implementation, a maximum value in CPE values to which transmitted data in the case of Inside COT correspond is taken as the CPE value to which the currently transmitted data correspond, so that a transmission priority in the case of Inside COT is higher than that in the case of Outside COT. In the second implementation, the currently transmitted data are transmitted data in the case where the first terminal equipment initiates continuous occupancy time (COT) (i.e. the first terminal equipment is in the case of OUTside COT), or the currently transmitted data are transmitted data in the case where the first terminal equipment shares COT initiated by the second terminal equipment (i.e. the first terminal equipment is in the case of INside COT).

For example, in the second implementation, the first terminal equipment selects a CPE value of a resource corresponding to transmitted data with the first identifier (e.g. INside COT) having a maximum CPE value in the other transmitted data (wherein even if there exist other transmitted data with a larger CPE value, if an identifier of the other transmitted data is OUTtside COT, the CPE value of the other transmitted data is not selected), and sets it to be the CPE value to which the currently transmitted data of the first terminal equipment correspond. Specifically, the CPE value of the other transmitted data may be obtained in the method in the embodiment of the first aspect, and the identifier of INside COT or the identifier of OUTside COT may be indicated by SCI, which is corresponding SCI providing reserved resources for the other transmitted data before the other transmitted data. Furthermore, even if the CPE value of the currently transmitted data is greater than the maximum value of the CPE (or a maximum value of the CPE identified as INside COT and corresponding to transmitted data) in the other transmitted data frequency division multiplexed with the currently transmitted data, if the currently transmitted data are transmitted data of OUTside COT, their CPE value is reduced and determined as a CPE value of a corresponding resource of transmitted data identified as INside COT with a maximum CPE value in transmitted data frequency division multiplexed with them.

In third implementation of operation 601, when the currently transmitted data are transmitted data in the case where the first terminal equipment shares the continuous occupancy time (COT) initiated by the second terminal equipment (i.e. the currently transmitted data are transmitted data in the case of Inside COT), the first terminal equipment sets the CPE value to which the currently transmitted data correspond to be the CPE value determined according to the indication information transmitted by the second terminal equipment. This indication information is, for example, carried by SCI.

For example, if the currently transmitted data are transmitted data in the case of OUTside COT, the first terminal equipment performs adjustment/setting/change on the CPE to which the currently transmitted data correspond according to the above first implementation or the above second implementation; and if the currently transmitted data are transmitted data in the case of INside COT, the first terminal equipment does not perform adjustment/setting/change on the CPE according to the above first implementation or the above second implementation, instead, for example, the terminal equipment initiating the COT (such as the second terminal equipment) indicates (such as via SCI) that the second terminal equipment performs COT sharing with the first terminal equipment, as well as a magnitude of the CPE value and relevant information.

In fourth implementation of operation 601, the first terminal equipment may perform adjustment/setting/change on the CPE according to the priority value indicated in the sidelink control information (SCI). For example, the first terminal equipment may perform adjustment/setting/change on the CPE only according to transmitted data with a lowest priority value (corresponding to a highest priority) in all the other transmitted data frequency division multiplexed the currently transmitted data. For example, a value of first CPE of the currently transmitted data is adjusted/set/changed to be a CPE value to which the other transmitted data with the lowest priority value correspond.

According to the embodiment of the second aspect of this disclosure, considering the information on other transmitted data of FDM, the CPE value of the currently transmitted data is set, which may facilitate different terminal equipments to perform SL transmission in an FDM manner, thereby improving spectrum efficiency.


Embodiment of a third aspect

At least addressed to the same problem as that in the embodiment of the first aspect or the embodiment of the second aspect, the embodiment of the third aspect of this disclosure provides a method for transmitting a signal, applicable to a first terminal equipment, the first terminal equipment performing sidelink communications, for example, the method for transmitting a signal is applicable to a scenario of SL-U.

The embodiment of the third aspect is an extension of the embodiment of the first aspect and the embodiment of the second aspect.

In the embodiment of the third aspect, the number of CPE values determined by the first terminal equipment may not be one, but a complete set or subset of all optional CPE values, that is, a set of CPE values. After determining the set of CPE values, the first terminal equipment may select (such in a random manner of selection, or other manners of selection) a CPE value from the set for transmission of current transmitted data (i.e. data to be transmitted).

For example, in the following cases, the number of CPE values determined by the first terminal equipment may not be one:

the first terminal equipment occupies frequency-domain resources of the entire LBT bandwidth; and/or

the first terminal equipment does not discover in a sensing process that resource reservation of other UEs is frequency division multiplexed with current transmission in identical slots; and/or

the current transmission of the first terminal equipment is periodic transmission, and the UE performs a time of random selection from a determined set in each period of transmission; and/or

the first terminal equipment operates in a manner of randomly selecting transmitted resources+LBT, that is, the first terminal equipment does not perform the operation of obtaining sidelink resources through "sensing+selection".

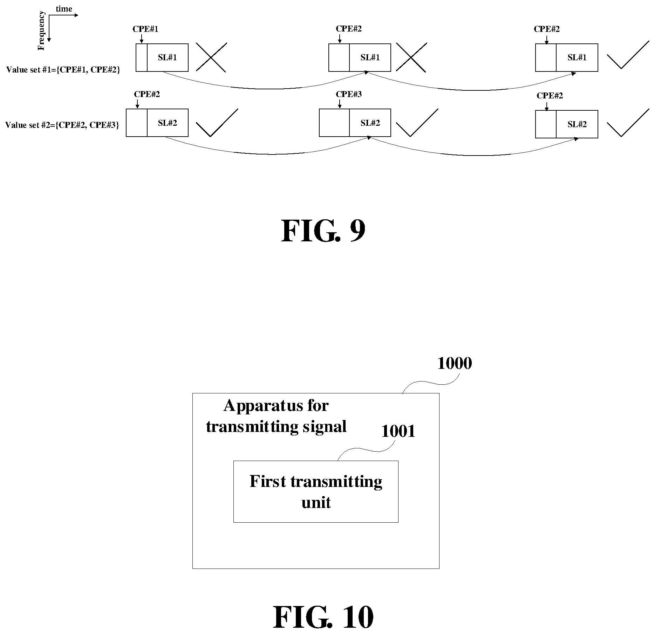

FIG. 9 is a schematic diagram of selecting a CPE value by the first terminal equipment from a set of CPE values for transmission of each period in a case of periodic transmission.

As shown in FIG. 9, SL#1 is a data periodically transmitted by the first terminal equipment#1. For each time of transmission of SL#1, the first terminal equipment#1 randomly selects CPE#1 or CPE#2 from a set of values of the first CPE Value set #1 = {CPE#1, CPE#2} for transmission of SL#1.

SL#12 a data periodically transmitted by the first terminal equipment#2. For each time of transmission of SL#2, the first terminal equipment#2 randomly selects CPE#2 or CPE#3 from a set of values of the second CPE Value set #2 = {CPE#2, CPE#3} for transmission of SL#2.

As shown in FIG. 9, transmission resources of SL#1 and SL#2 are within identical slots. CPE#1 is smaller than CPE#2, and CPE#2 is smaller than CPE#3. In a first time of transmission in FIG. 9, CPE values of SL#1 and SL#2 are CPE#1 and CPE#2, respectively. Therefore, SL#2 is transmitted, and SL#1 is not transmitted. In a second time of transmission in FIG. 9, the CPE values of SL#1 and SL#2 are CPE#2 and CPE#3, respectively. Therefore, SL#2 is transmitted, and SL#1 is not transmitted. In a third time of transmission in FIG. 9, the CPE values of SL#1 and SL#2 are both CPE#2. Therefore, SL#2 and SL#1 are both transmitted, that is, SL#2 and SL#1 are frequency division multiplexed. Thus, spectrum efficiency of the system may be improved.

In the embodiment of the third aspect, for the extension of the embodiment of the first aspect, reference may be made to Implementation B in the embodiment of the first aspect: for example, according to the mapping relationship between the information on the data to be transmitted (such as the priority and/or PDB) and the set of CPE values, a corresponding set is determined, wherein the lower the priority value (i.e. the higher the priority), the larger the CPE value in the corresponding set of CPE values; for example, reference may also be made to the method for performing indirect mapping according to the $\Delta$ value in the embodiment of the first aspect to perform (pre)definition/(pre)configuration; in addition, reference may also be made to the implementations in different cases of { InsideCOT, OutsideCOT} in the embodiment of the first aspect.

In the embodiment of the third aspect, for the extension of the embodiment of the second aspect, it may be that: the terminal equipment (e.g. the first terminal equipment#1) selects a CPE value in a set in a time of transmission, and in corresponding SCI reserved for a next time of transmission, selects a CPE value in the set based on implementation and indicates it (such as via SCI), or indicates (such as via SCI) a maximum value or a minimum value in the set. The terminal equipment detecting that the transmission is frequency division multiplexed with the reserved resources is, for example, the first terminal equipment#2, wherein for the first terminal equipment#2, the first terminal equipment#1 is equivalent to the second terminal equipment in the embodiment of the second aspect. The first terminal equipment#2 may adjust/-set/change the value of the first CPE of first terminal equipment#2 by using the indicated CPE value in the method in the embodiment of the second aspect. Thus, the first terminal equipment#2 may perform FDM with the first terminal equipment#1.

In the embodiment of the third aspect, for the extension of the embodiment of the second aspect, it may also be that: the terminal equipment (e.g. the first terminal equipment#1) selects a CPE value in a set in a time of transmission, and in corresponding SCI reserved for a next time of transmission, the set that is indicated (such as via SCI) the set of CPE values selected by the terminal equipment. The terminal equipment detecting that the transmission is frequency division multiplexed with the reserved resources is, for example, the first terminal equipment#2, wherein for the first terminal equipment#2, the first terminal equipment#1 is equivalent to the second terminal equipment in the embodiment of the second aspect. The first terminal equipment#2 may adjust/set/change the value of the first CPE of the first terminal equipment#2 to be a minimum value in the CPE values in the set of CPE values, or a value determined based on implementation, or a maximum value. Thus, a probability that the first terminal equipment#2 and the first terminal equipment#1 perform FDM is increased.

Embodiment of a fourth aspect

The embodiment of this disclosure provides an apparatus for transmitting a signal, applicable to a first terminal equipment, the first terminal equipment performing sidelink communications.

FIG. 10 is a schematic diagram of an apparatus for transmitting a signal in the embodiment of the fourth aspect. As shown in FIG. 10, an apparatus 1000 for transmitting a signal includes a first transmitting unit 1001, the first transmitting unit 1001 being configured to:

determine information on cyclic prefix extension (CPE) according to information on data to be transmitted; and perform sidelink signal transmission according to the CPE.

In at least one embodiment, the information on the data to be transmitted includes:

a priority of the data to be transmitted, and/or a package delay budget (PDB) of the data to be transmitted; and the information on CPE includes:

a value of the CPE or a value of a first parameter, the value of the first parameter being used for calculating the value of the CPE.

In at least one embodiment, the lower a value of the priority of the data to be transmitted, the larger the value of the CPE, and the smaller the PDB of the data to be transmitted, the larger the value of the CPE.

In at least one embodiment, there exists a mapping relationship between the information on the data to be transmitted and the value of the CPE or the value of the first parameter.

In at least one embodiment, in a case where the first terminal equipment initiates a continuous occupancy time (COT), the first transmitting unit determines the value of the CPE according to the mapping relationship.

In at least one embodiment, in a case where the first terminal equipment shares continuous occupancy time (COT) initiated by another terminal equipment different from the first terminal equipment, the first transmitting unit determines the value of the CPE according to indication information transmitted by the other terminal equipment. The indication information is, for example, carried by sidelink control information (SCI).

In at least one embodiment, the mapping relationship includes:

a mapping relationship between the information on the data to be transmitted and a value of the CPE in a case where the first terminal equipment initiates a COT and a value of the CPE in the case where the first terminal equipment shares the COT initiated by another terminal equipment different from the first terminal equipment; or a mapping relationship between the information on the data to be transmitted and a value of the first parameter in a case where the first terminal equipment initiates a COT and a value of the first parameter in the case where the first terminal equipment shares the COT initiated by another terminal equipment different from the first terminal equipment.

In at least one embodiment, the determining the value of the CPE includes:
there existing a mapping relationship between the information on the data to be transmitted and a first set of CPE values or a second set of values of a first parameter, wherein the first transmitting unit selects a value of CPE from the first set as the determined value of the CPE, or the first transmitting unit calculates the determined value of the CPE by using a value of the first parameter selected from the second set.

In at least one embodiment, in the case where the first terminal equipment initiates a continuous occupancy time (COT), the first transmitting unit determines the first set according to the mapping relationship.

In at least one embodiment, in the case where the first terminal equipment shares the continuous occupancy time (COT) initiated by another terminal equipment different from the first terminal equipment, the first transmitting unit determines the first set according to indication information transmitted by the other terminal equipment, wherein the indication information is, for example, carried by sidelink control information (SCI).

In at least one embodiment, the mapping relationship includes:

a mapping relationship between the information on the data to be transmitted and a first set in a case where the first terminal equipment initiates a COT and a first set in the case where the first terminal equipment shares the COT initiated by another terminal equipment different from the first terminal equipment; or a mapping relationship between the information on the data to be transmitted and a second set in the case where the first terminal equipment initiates a COT and a second set in the case where the first terminal equipment shares the COT initiated by another terminal equipment different from the first terminal equipment.

In at least one embodiment, the determined values of CPE or a value of a first parameter may be indicated via sidelink control information (SCI).

In at least one embodiment, the determined first set or second set, or a value of CPE in the determined first set or a value of a first parameter in the determined second set, may be indicated via sidelink control information (SCI).

In at least one embodiment, the value of the CPE includes:
a maximum value or a minimum value in the first set, or a value selected according to implementation.

Embodiment of a fifth aspect

The embodiment of this disclosure provides an apparatus for transmitting a signal, applicable to a first terminal equipment, the first terminal equipment performing sidelink communications.

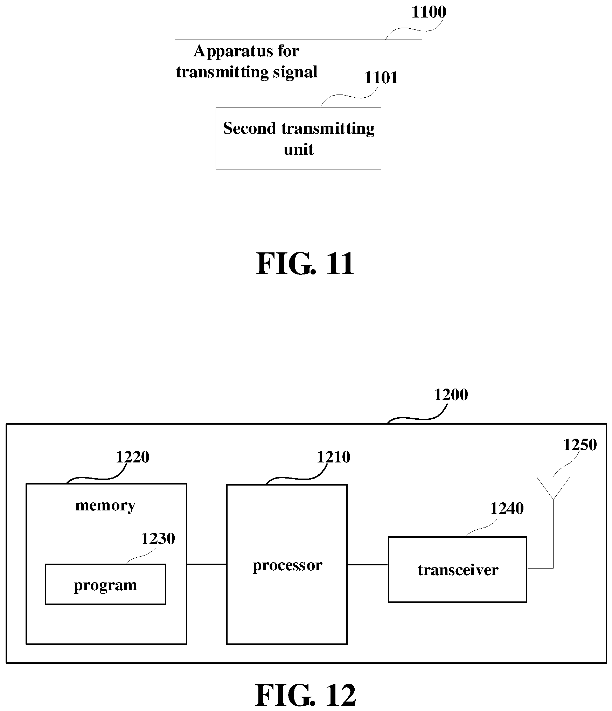

FIG. 11 is a schematic diagram of ab apparatus for transmitting a signal in the embodiment of the fifth aspect. As shown in FIG. 11, an apparatus 1100 for transmitting a signal includes a second transmitting unit 1101, the second transmitting unit 1101 being configured to:

set a value of cyclic prefix extension (CPE) to which currently transmitted data of the first terminal equipment correspond according to values or priorities of resources used by the currently transmitted data in other CPE to which other transmitted data of identical time units correspond and a value of first CPE; and

perform sidelink signal transmission based on the CPE, wherein the other transmitted data are data transmitted by a second terminal equipment.

In at least one embodiment, in a case where values of the CPE to which at least one other transmitted data corresponds are greater than the value of the first CPE, the second transmitting unit sets the value of the CPE to which the currently transmitted data correspond to be a maximum value in the values of the CPE to which the at least one other transmitted data corresponds.

In at least one embodiment, in a case where the values of the CPE to which the other transmitted data correspond are all not greater than the value of the first CPE, the second transmitting unit takes the value of the first CPE as the value of the CPE to which the currently transmitted data correspond.

In at least one embodiment, the second transmitting unit sets the value of the CPE to which the currently transmitted data correspond to be a maximum value in values of CPE to which transmitted data in the other transmitted data with a first identifier correspond, the first identifier being used to indicate that the second terminal equipment performs data transmission in a case of sharing continuous occupancy time (COT) initiated by a third terminal equipment.

In at least one embodiment, the currently transmitted data are transmitted data in a case where the first terminal equipment initiates a continuous occupancy time (COT), or, the currently transmitted data are transmitted data in a case where the first terminal equipment shares a COT initiated by the second terminal equipment.

In at least one embodiment, when the currently transmitted data are transmitted data in a case where the first terminal equipment shares a continuous occupancy time (COT) initiated by the second terminal equipment,

the second transmitting unit sets the value of the CPE to which the currently transmitted data correspond to be a value of the CPE determined according to the indication information, carried by the sidelink control information (SCI), transmitted by the second terminal equipment.

In at least one embodiment, the value of the first CPE refers to:

a value of the CPE determined by the first terminal equipment, or a value of the CPE selected by the first terminal equipment from a set of determined values of CPE.

In at least one embodiment, the value of CPE selected from the set of determined values of CPE includes:

a value selected from the set according to implementation, or a maximum value in the set, or a minimum value in the set.

Embodiment of a sixth aspect

The embodiment of this disclosure provides a communication system, including a terminal equipment at a transmitter end and a terminal equipment at a receiver end performing sidelink communication. The terminal equipment at the transmitter end and the terminal equipment at the receiver end may adopt structures of identical terminal equipments. The terminal equipment at the transmitter end is, for example, a first terminal equipment.

FIG. 12 is a schematic diagram of a terminal equipment in the embodiment of the sixth aspect. The terminal equipment shown in FIG. 12 may be applicable to the terminal equipment at the transmitter end and the terminal equipment at the receiver end.

As shown in FIG. 12, a terminal equipment 1200 may include a processor 1210 (such as a central processing unit (CPU)) and a memory 1220, the memory 1220 being coupled to the processor 1210. The memory 1220 may store various data, and furthermore, it may store a program 1230 for information processing, and execute the program 1230 under control of the processor 1210.

For example, the processor 1210 may be configured to execute a program to carry out the method as described in the embodiment of the first or the second or the third aspect.

Furthermore, as shown in FIG. 12, the terminal equipment 1200 may include a transceiver 1240, and an antenna 1250, etc. Functions of the above components are similar to those in the related art, and shall not be described herein any further. It should be noted that the terminal equipment 1200 does not necessarily include all the parts shown in FIG. 12, and furthermore, the terminal equipment 1200 may include parts not shown in FIG. 12, and the related art may be referred to.

An embodiment of this disclosure provides a computer readable program, which, when executed in a terminal equipment, causes the terminal equipment to carry out the method as described in the embodiment of the first or the second or the third aspect.

An embodiment of this disclosure provides a computer storage medium, including a computer readable program, which causes a terminal equipment to carry out the method as described in the embodiment of the first or the second or the third aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.

1. A method for transmitting a signal, applicable to a first terminal equipment, the first terminal equipment performing sidelink communications, the method including:

determining information on cyclic prefix extension (CPE) by the first terminal equipment according to information on data to be transmitted; and
performing sidelink signal transmission by the first terminal equipment based on the CPE.

2. The method according to supplement 1, wherein,
the information on the data to be transmitted includes:

a priority of the data to be transmitted, and/or a package delay budget (PDB) of the data to be transmitted; and the information on CPE includes:

a value of the CPE or a value of a first parameter,
the value of the first parameter being used for calculating the value of the CPE.

3. The method according to supplement 2, wherein,

the lower a value of the priority of the data to be transmitted, the larger the value of the CPE,

and the smaller the PDB of the data to be transmitted, the larger the value of the CPE.

4. The method according to any one of supplements 1-3, wherein,
there exists a mapping relationship between the information on the data to be transmitted and the value of the CPE or the value of the first parameter.

5. The method according to supplement 4, wherein,

> in a case where the first terminal equipment initiates a continuous occupancy time (COT),
> the first terminal equipment determines the value of the CPE according to the mapping relationship.

6. The method according to supplement 5, wherein,

> in a case where the first terminal equipment shares continuous occupancy time (COT) initiated by another terminal equipment different from the first terminal equipment,
> the first terminal equipment determines the value of the CPE according to indication information, carried by sidelink control information (SCI), transmitted by the other terminal equipment.

7. The method according to supplement 4, wherein,
the mapping relationship includes:

> a mapping relationship between the information on the data to be transmitted and a value of the CPE in a case where the first terminal equipment initiates a COT and a value of the CPE in the case where the first terminal equipment shares the COT initiated by another terminal equipment different from the first terminal equipment; or
> a mapping relationship between the information on the data to be transmitted and a value of the first parameter in a case where the first terminal equipment initiates a COT and a value of the first parameter in the case where the first terminal equipment shares the COT initiated by another terminal equipment different from the first terminal equipment.

8. The method according to any one of supplements 1-3, wherein the determining the value of the CPE includes:

> there existing a mapping relationship between the information on the data to be transmitted and a first set of CPE values or a second set of values of a first parameter,
> wherein,
> the first terminal equipment selects a value of CPE from the first set as the determined value of the CPE, or the first terminal equipment calculates the determined value of the CPE by using a value of the first parameter selected from the second set.

9. The method according to supplement 8, wherein,

> in the case where the first terminal equipment initiates a continuous occupancy time (COT),
> the first terminal equipment determines the first set according to the mapping relationship.

10. The method according to supplement 9, wherein,

> in the case where the first terminal equipment shares the continuous occupancy time (COT) initiated by another terminal equipment different from the first terminal equipment,
> the first terminal equipment determines the first set according to indication information, carried by sidelink control information (SCI), transmitted by the other terminal equipment.

11. The method according to supplement 8, wherein,
the mapping relationship includes:

> a mapping relationship between the information on the data to be transmitted and a first set in a case where the first terminal equipment initiates a COT and a first set in the case where the first terminal equipment shares the COT initiated by another terminal equipment different from the first terminal equipment; or
> a mapping relationship between the information on the data to be transmitted and a second set in the case where the first terminal equipment initiates a COT and a second set in the case where the first terminal equipment shares the COT initiated by another terminal equipment different from the first terminal equipment.

12. The method according to any one of supplements 1-7, wherein the method further includes:
indicating the determined CPE value or a value of a first parameter by the first terminal equipment via sidelink control information (SCI).

13. The method according to any one of supplements 8-11, wherein the method further includes:

indicating the determined first set or second set by the first terminal equipment via sidelink control information (SCI),
or,
indicating a value of CPE in the determined first set or a value of a first parameter in the determined second set by the first terminal equipment via sidelink control information (SCI).

14. The method according to supplement 13, wherein,
the value of the CPE includes:
a maximum value or a minimum value in the first set, or a value selected according to implementation.

15. A method for transmitting a signal, applicable to a first terminal equipment, the first terminal equipment performing sidelink communications, the method including:

setting a value of cyclic prefix extension (CPE) to which currently transmitted data of the first terminal equipment correspond by the first terminal equipment according to values or priorities of resources used by the currently transmitted data in other CPE to which other transmitted data of identical time units correspond and a value of first CPE; and
performing sidelink signal transmission by the first terminal equipment based on the CPE,
wherein,
the other transmitted data are data transmitted by a second terminal equipment.

16. The method according to supplement 15, wherein,

in a case where values of the CPE to which at least one other transmitted data corresponds are greater than the value of the first CPE,
the first terminal equipment sets the value of the CPE to which the currently transmitted data correspond to be a maximum value in the values of the CPE to which the at least one other transmitted data corresponds.

17. The method according to supplement 15, wherein,

in a case where the values of the CPE to which the other transmitted data correspond are all not greater than the value of the first CPE,
the first terminal equipment takes the value of the first CPE as the value of the CPE to which the currently transmitted data correspond.

18. The method according to supplement 15, wherein,

the first terminal equipment sets the value of the CPE to which the currently transmitted data correspond to be a maximum value in values of CPE to which transmitted data in the other transmitted data with a first identifier correspond,
the first identifier being used to indicate that the second terminal equipment performs data transmission in a case of sharing continuous occupancy time (COT) initiated by a third terminal equipment.

19. The method according to supplement 18, wherein,

the currently transmitted data are transmitted data in a case where the first terminal equipment initiates a continuous occupancy time (COT),
or,
the currently transmitted data are transmitted data in a case where the first terminal equipment shares a COT initiated by the second terminal equipment.

20. The method according to supplement 15, wherein,

when the currently transmitted data are transmitted data in a case where the first terminal equipment shares a continuous occupancy time (COT) initiated by the second terminal equipment,
the first terminal equipment sets the value of the CPE to which the currently transmitted data correspond to be a value of the CPE determined according to the indication information, carried by the sidelink control information (SCI), transmitted by the second terminal equipment.

21. The method according to any one of supplements 15-20, wherein,
the value of the first CPE refers to:
a value of the CPE determined by the first terminal equipment, or a value of the CPE selected by the first terminal equipment from a set of determined values of CPE.

22. The method according to supplement 21, wherein,
the value of CPE selected from the set of determined values of CPE includes:
a value selected from the set according to implementation, or a maximum value in the set, or a minimum value in the set.

**Claims**

1. An apparatus for transmitting signals, applicable to a first terminal equipment, the first terminal equipment performing sidelink communications, the apparatus comprising a first transmitting unit, the first transmitting unit being configured to:

   determine information on cyclic prefix extension (CPE) according to information on data to be transmitted; and
   perform sidelink signal transmission according to the CPE.

2. The apparatus according to claim 1, wherein,
   the information on the data to be transmitted comprises:

   a priority of the data to be transmitted, and/or a package delay budget (PDB) of the data to be transmitted; and the information on CPE comprises:

   a value of the CPE or a value of a first parameter,
   the value of the first parameter being used for calculating the value of the CPE.

3. The apparatus according to claim 2, wherein,

   the lower a value of the priority of the data to be transmitted, the larger the value of the CPE,
   and the smaller the PDB of the data to be transmitted, the larger the value of the CPE.

4. The apparatus according to claim 1, wherein,
   there exists a mapping relationship between the information on the data to be transmitted and the value of the CPE or the value of the first parameter.

5. The apparatus according to claim 4, wherein,

   in a case where the first terminal equipment initiates a continuous occupancy time (COT),
   the first transmitting unit determines the value of the CPE according to the mapping relationship.

6. The apparatus according to claim 5, wherein,

   in a case where the first terminal equipment shares continuous occupancy time (COT) initiated by another terminal equipment different from the first terminal equipment,
   the first transmitting unit determines the value of the CPE according to indication information carried by sidelink control information (SCI) transmitted by the other terminal equipment.

7. The apparatus according to claim 4, wherein,
   the mapping relationship comprises:

   a mapping relationship between the information on the data to be transmitted and a value of the CPE in a case where the first terminal equipment initiates a COT and a value of the CPE in the case where the first terminal equipment shares the COT initiated by another terminal equipment different from the first terminal equipment; or a mapping relationship between the information on the data to be transmitted and a value of the first parameter in a case where the first terminal equipment initiates a COT and a value of the first parameter in the case where the first terminal equipment shares the COT initiated by another terminal equipment different from the first terminal equipment.

8. The apparatus according to claim 1, wherein the determining the value of the CPE comprises:

there existing a mapping relationship between the information on the data to be transmitted and a first set of CPE values or a second set of first parameter values, wherein, the first transmitting unit selects a value of CPE from the first set as the determined value of the CPE, or the first transmitting unit uses a value of the first parameter selected from the second set to calculate the determined value of the CPE.

9. The apparatus according to claim 8, wherein,

in the case where the first terminal equipment initiates a continuous occupancy time (COT), the first transmitting unit determines the first set according to the mapping relationship.

10. The apparatus according to claim 9, wherein,

in the case where the first terminal equipment shares the continuous occupancy time (COT) initiated by another terminal equipment different from the first terminal equipment, the first transmitting unit determines the first set according to indication information carried by sidelink control information (SCI) transmitted by the other terminal equipment.

11. The apparatus according to claim 8, wherein, the mapping relationship comprises:

a mapping relationship between the information on the data to be transmitted and a first set in a case where the first terminal equipment initiates a COT and a first set in the case where the first terminal equipment shares the COT initiated by another terminal equipment different from the first terminal equipment; or a mapping relationship between the information on the data to be transmitted and a second set in the case where the first terminal equipment initiates a COT and a second set in the case where the first terminal equipment shares the COT initiated by another terminal equipment different from the first terminal equipment.

12. The apparatus according to claim 1, wherein, the determined information on the CPE is indicated via sidelink control information (SCI).

13. The apparatus according to claim 8, wherein,

the determined first set or second set is indicated via sidelink control information (SCI), or, a value of CPE in the determined first set or a value of a first parameter in the determined second set is indicated via sidelink control information (SCI).

14. The apparatus according to claim 13, wherein, the value of the CPE comprises: a maximum or minimum value in the first set, or a value selected according to implementation.

15. An apparatus for transmitting signals, applicable to a first terminal equipment, the first terminal equipment performing sidelink communications, the apparatus comprising a second transmitting unit, the second transmitting unit being configured to:

set a value of cyclic prefix extension (CPE) to which currently transmitted data of the first terminal equipment correspond according to values or priorities of resources used by the currently transmitted data in other CPE to which other transmitted data of identical time units correspond and a value of first CPE; and
perform sidelink signal transmission according to the CPE,
wherein,
the other transmitted data are data transmitted by a second terminal equipment.

16. The apparatus according to claim 15, wherein,

in a case where values of the CPE to which at least one other transmitted data corresponds are greater than the value of the first CPE,
the second transmitting unit sets the value of the CPE to which the currently transmitted data correspond to be a maximum value in the values of the CPE to which the at least one other transmitted data corresponds; or
in a case where the values of the CPE to which the other transmitted data correspond are all not greater than the value of the first CPE,
the second transmitting unit takes the value of the first CPE as the value of the CPE to which the currently transmitted data correspond; or
when the currently transmitted data are transmitted data in a case where the first terminal equipment shares a continuous occupancy time (COT) initiated by the second terminal equipment,
the second transmitting unit sets the value of the CPE to which the currently transmitted data correspond to be a value of the CPE determined according to the indication information carried by the sidelink control information (SCI) transmitted by the second terminal equipment.

17. The apparatus according to claim 15, wherein,

the second transmitting unit sets the value of the CPE to which the currently transmitted data correspond to be a maximum value in values of CPE to which transmitted data in the other transmitted data with a first identifier correspond,
the first identifier being used to indicate that the second terminal equipment performs data transmission in a case of sharing continuous occupancy time (COT) initiated by a third terminal equipment.

18. The apparatus according to claim 17, wherein,

the currently transmitted data are transmitted data in a case where the first terminal equipment initiates a continuous occupancy time (COT),
or,
the currently transmitted data are transmitted data in a case where the first terminal equipment shares a COT initiated by the second terminal equipment.

19. The apparatus according to claim 15, wherein,
the value of the first CPE refers to:
a value of the CPE determined by the first terminal equipment, or a value of the CPE selected by the first terminal equipment from a set of determined values of CPE.

20. The apparatus according to claim 19, wherein,
the value of CPE selected from the set of determined values of CPE comprises:
a value selected from the set according to implementation, or a maximum value in the set, or a minimum value in the set.

COT sharing

25 μ s+TA

DL

UL

CPE

Gap

## FIG. 1

time

frequency

201

CPE

UL#1

UL#2

UL#2 is prior to UL#1

202

CPE

UL#1

UL#2

UL#1 and UL#2 are FDM

## FIG. 2

301

the first terminal equipment determines information on cyclic prefix extension (CPE) according to information on data to be transmitted

302

the first terminal equipment performs sidelink signal transmission based on the determined CPE

303

the first terminal equipment indicates the value of CPE or the value of the first parameter determined in operation 301

304

the first terminal equipment indicates the determined first set or second set, or the first terminal equipment indicates a value of CPE in the determined first set or a value of a first parameter in the second set

**FIG. 3**

CPE

SL#n

**FIG. 4**

501

502

CPE value

CPE value

priority

## FIG. 5

601

the first terminal equipment sets a value of cyclic prefix extension (CPE) to which currently transmitted data of the first terminal equipment correspond according to values or priorities of resources used by the currently transmitted data in other CPE to which other transmitted data of identical time units correspond and a value of first CPE, wherein the other transmitted data are data transmitted by a second terminal equipment

602

the first terminal equipment performs sidelink signal transmission according to the CPE

## FIG. 6

**FIG. 7**

**FIG. 8**

**FIG. 9**

**FIG. 10**

1100

Apparatus for
transmitting signal

1101

Second transmitting
unit

## FIG. 11

1200

1220

memory

1210

1230

processor

1240

1250

program

transceiver

## FIG. 12

## INTERNATIONAL SEARCH REPORT

| | International application No. |
| --- | --- |
| | **PCT/CN2021/125348** |

**A.    CLASSIFICATION OF SUBJECT MATTER**

H04W 72/00(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; 3GPP: 边链, 侧链, 侧行链路, 旁链, 循环前缀, 扩展, 长度, 连续占用时间, 共享, 终端, 优先级, 包时延界限, sidelink, SL-U, CP extension, extended CP, CPE, ECP, length, COT, sharing, priority, PDB

**C.    DOCUMENTS CONSIDERED TO BE RELEVANT**

| Category* | Citation of document, with indication, where appropriate, of the relevant passages | Relevant to claim No. |
| --- | --- | --- |
| X | CN 113518385 A (NOKIA SHANGHAI BELL CO., LTD. et al.) 19 October 2021 (2021-10-19)<br>       description, paragraphs [0037]-[0165] | 1 |
| A | CN 112042162 A (MEDIATEK SINGAPORE PTE. LTD.) 04 December 2020 (2020-12-04)<br>       entire document | 1-20 |
| A | CN 112311712 A (DATANG MOBILE COMMUNICATIONS EQUIPMENT CO., LTD.) 02 February 2021 (2021-02-02)<br>       entire document | 1-20 |
| A | CN 113170312 A (APPLE INC.) 23 July 2021 (2021-07-23)<br>       entire document | 1-20 |
| A | NOKIA et al. "Feature Lead's Summary on Channel Access Procedures"<br>*3GPP TSG RAN WG1 Meeting #99 R1-1912258*, 19 November 2019 (2019-11-19),<br>       entire document | 1-20 |

☐ Further documents are listed in the continuation of Box C.        ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **24 June 2022** | **05 July 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/125348**

| Patent document cited in search report | | | Publication date (day/month/year) | Patent family member(s) | | | Publication date (day/month/year) |
|---|---|---|---|---|---|---|---|
| CN | 113518385 | A | 19 October 2021 | WO | 2021203388 | A1 | 14 October 2021 |
| CN | 112042162 | A | 04 December 2020 | US | 2020322198 | A1 | 08 October 2020 |
| | | | | TW | 202038661 | A | 16 October 2020 |
| | | | | WO | 2020200219 | A1 | 08 October 2020 |
| CN | 112311712 | A | 02 February 2021 | WO | 2021017729 | A1 | 04 February 2021 |
| | | | | TW | 202107927 | A | 16 February 2021 |
| | | | | CN | 112311712 | B | 08 February 2022 |
| | | | | KR | 20220038731 | A | 29 March 2022 |
| CN | 113170312 | A | 23 July 2021 | WO | 2021087866 | A1 | 14 May 2021 |
| | | | | KR | 20210056945 | A | 20 May 2021 |
| | | | | EP | 3844994 | A1 | 07 July 2021 |
| | | | | IN | 202017048443 | A | 08 October 2021 |
| | | | | EP | 3844994 | A4 | 22 December 2021 |

Form PCT/ISA/210 (patent family annex) (January 2015)